# EUROPEAN PATENT APPLICATION

(11) **EP 4 617 752 A1**
(43) Date of publication of application: **17.09.2025**
(21) Application number: 24218857.1
(22) Date of filing: 10.12.2024
(51) Int. Cl.: G02B 6/44

(54) **FIBER CLOSURE EXTERNAL CABLE CLIP**

(30) Priority: 11.03.2024 IN 202411017180
(71) Applicant: Sterlite Technologies Limited, Gurugram, Haryana 122102 (IN)
(72) Inventor: PURICELLA, Alessandro, 21040 Varese (IT)
(74) Representative: Valet Patent Services Limited

(57) **Abstract**

Disclosed is a fiber closure external cable clip (100, 200, 300) to be mounted on a port (102) of the fiber closure (104) comprises a petal region (106) configured to be detachably secured with the port (102) and an anchoring region (108) having one or more anchoring clamps (116) is structurally connected to the petal region (106). In particular, the optical fiber cable entering and/or exiting the fiber enclosure (104) is detachably secured to exactly one anchoring clamp of the one or more anchoring clamps (116), thereby restricting a radial movement of the optical fiber cable (130).

## Description

### TECHNICAL FIELD

Embodiments of the present disclosure relate to the field of optical telecommunication systems, and more particularly, relates to an optical fiber cable hauling system.

This application claims the benefit of Indian Application No. "IN202411017180" titled "FIBER CLOSURE EXTERNAL CABLE CLIP" filed by the applicant on 11 March 2024 which is incorporated herein by reference in its entirety.

### Background Art

Modern optical devices and optical communications systems widely use fiber optic cables. Fiber optic cables are often used to transmit light signals for high speed data transmission. A fiber optic cable typically includes an optical fiber or optical fibers, a buffer or buffers that surround the fiber or fibers, a strength layer that surrounds the buffer or buffers, and an outer jacket. The optical fibers function to carry optical signals.

Optical fiber refers to the technology and the medium for the transmission of data as light pulses along an ultrapure strand of glass, which is as thin as a human hair. For many years, optical fibers have been extensively used in high-performance and long-distance data and networking. Every fiber closure (CODC - OCD families) hosts optical fiber cables. Generally, doors and/or inlets are used to let the optical fiber cables enter and/or exit the fiber closure. These optical fiber cables are locked in position inside the fiber closure, and one or more strength members of the optical fiber cable are used to hold the same fiber optic cable inside the fiber closure. However, sometimes the optical fiber cable is not locked properly and pulling of the optical fiber cable from outside the fiber closure can result in damage to connectivity.

Telecommunications systems typically employ a network of telecommunications cables capable of transmitting large volumes of data and voice signals over relatively long distances. The telecommunications cables can include fiber optic cables, electrical cables, or combinations of electrical and fiber optic cables. A typical telecommunications network also includes a plurality of telecommunications enclosures integrated throughout the network of telecommunications cables. The telecommunications enclosures are adapted to house and protect telecommunications components such as splices, termination panels, power splitters, and wavelength division multiplexers.

It is often preferred for telecommunications enclosures to be re-enterable. The term "re-enterable" means that the telecommunications enclosures can be reopened to allow access to the telecommunications components housed therein without requiring the removal and destruction of the telecommunications enclosures. For example, certain telecommunications enclosures can include separate access panels that can be opened to access the interiors of the enclosures, and then closed to re-seal the enclosures. Other telecommunications enclosures take the form of elongated sleeves formed by wrap-around covers or half-shells having longitudinal edges that are joined by clamps or other retainers. Still other telecommunications enclosures include two half-pieces that are joined together through clamps, wedges or other structures. Telecommunications enclosures are typically sealed to inhibit the intrusion of moisture or other contaminants.

Prior art reference "US9244238B2" discloses a seal block to be installed in a cable port of a fiber enclosure. A fixation assembly for attaching each of the optical fibers is present and latched to the seal block. The seal block includes a plurality of passages for passing an optical fiber cable and the unused passages are blocked by using a filler rod.

Another prior art reference "EP2533384A1" discloses a sealing device for sealing a duct of a fiber enclosure. The sealing device is tubular in shape and includes an upper tube holder and a lower tube holder for holding and organizing the fiber tubes. Further, the device is filled with a resin to block movement of fiber tubes inside.

However, the identified prior-art references are specific to be mounted inside the closure port to seal the port and doesn't provide external support to the entering/exiting fiber cable.

In light of the above stated discussion, to overcome the above stated disadvantages there is a need for an optical fiber cable external clip that overcomes one or more limitations associated with the available systems.

Thus, the present disclosure proposes a technical solution that overcomes the above-stated limitations in the prior arts by providing a fiber closure external cable clip.

### SUMMARY OF THE DISCLOSURE

Embodiments of the present disclosure relates to a fiber closure external cable clip configured to be mounted on a port of the fiber closure comprising a petal region configured to be detachably secured with the port and an anchoring region structurally connected to the petal region. The anchoring region may have one or more anchoring clamps . And, the optical fiber cable entering and/or exiting the fiber closure is detachably secured to exactly one anchoring clamp of the one or more anchoring clamps thereby restricting a movement of the optical fiber cable.

According to the first aspect of the present disclosure, the petal region further comprises one or more petal clamps. The one or more petal clamps encapsulates the port. In particular, the petal region can be detachably secured with the port by one or more restraining elements.

According to the second aspect of the present disclosure, the cable entering and/or exiting the fiber closure is detachably secured to exactly one anchoring clamp of the one or more anchoring clamps by way of one or more restraining elements.

According to the third aspect of the present disclosure, each petal clamp of the one or more petal clamps further comprises a plurality of protrusions spaced apart from each other to encapsulate the port and restrict a movement of the petal region over the port.

According to the fourth aspect of the present disclosure, the fiber closure external cable clip further comprises a cylindrical region connecting the petal region to the anchoring region. In particular, the cylindrical region has an octagonal shape.

According to the fifth aspect of the present disclosure, the petal region, the anchoring region and the cylindrical region are integrally moulded into a single component.

According to the sixth aspect of the present disclosure, the one or more anchoring clamps have one or more structures to restrict sliding of the optical fiber cable.

According to the seventh aspect of the present disclosure, each anchoring clamp of the one or more anchoring clamps has a length (L) in a range of 40 millimetres (mm) to 70 mm. And, each anchoring clamp of the one or more anchoring clamps has a width (W) in a range of 12 mm to 15 mm.

The foregoing objectives of the present disclosure are attained by providing a fiber closure external cable clip.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1A is a pictorial snapshot illustrating a bottom perspective view of a fiber closure external cable clip adapted to be mounted on a port of a fiber closure in accordance with an embodiment of the present disclosure;
Fig. 1B is a pictorial snapshot illustrating a side view of the external cable clip in accordance with an embodiment of the present disclosure;
Fig. 1C is a pictorial snapshot illustrating a side perspective view of the external cable clip installed onto a port of a fiber closure in accordance with an embodiment of the present disclosure;
Fig. 2 is a pictorial snapshot illustrating side perspective view of an external cable clip in accordance with an embodiment of the present disclosure;
Fig. 3 is a pictorial snapshot illustrating side perspective view of another external cable clip in accordance with another embodiment of the present disclosure;
Fig. 4 is a pictorial snapshot illustrating a side perspective view of a blind cable clip in accordance with an embodiment of the present disclosure;
Fig. 5 is a pictorial snapshot illustrating a bottom view of the fiber closure having a plurality of external cable clips installed thereto in accordance with an embodiment of the present disclosure;
Fig. 6 a bottom view of a circular fiber closure having a plurality of external cable clips installed thereto in accordance with an embodiment of the present disclosure.

The fiber closure external cable clip illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

### The following brief definition of terms shall apply throughout the present disclosure:

The term "optical fiber" as used herein refers to a light guide that provides highspeed data transmission. The optical fiber has one or more glass core regions and one or more glass cladding regions. The light moving through the glass core regions of the optical fiber relies upon the principle of total internal reflection, where the glass core regions have a higher refractive index (n1) than the refractive index (n2) of the glass cladding region of the optical fiber.

The term "optical fiber cable" as used herein refers to a cable that encloses one or more optical fibers.

The term "petal region" as used herein refers to an upper region of an external cable clip encapsulating a port of a fiber closure.

The term "petal clamp" as used herein refers to two or more extended fins in the petal region to encapsulate the port.

The term "anchoring region" as used herein refers to a lower region of the clip used to hold an optical fiber cable.

The term "anchoring clamp" as used herein refers to two or more extended fins to tie the optical fiber cables. Specifically, number of extended fins are equal to a number of optical fiber cables.

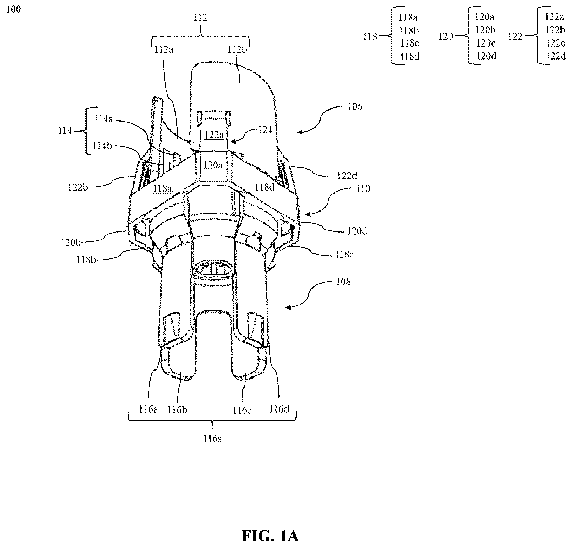

Fig. 1A is a pictorial snapshot illustrating a bottom perspective view of a fiber closure external cable clip 100 adapted to be mounted on a port 102 of a fiber 104 closure in accordance with an embodiment of the present disclosure. The fiber closure external cable clip 100 (hereinafter interchangeably referred to and designated as "the external cable clip 100") may be adapted to be mounted externally over the port 102 of the fiber closure 104 to provide additional strength for restraining optical fiber cables entering and/or exiting the fiber closure 104 and further restricting a movement of the optical fiber cables inside the port 102.

In particular, the external cable clip 100 may have a petal region 106 and an anchoring region 108. Moreover, the external cable clip 100 may have a cylindrical region 110 such that the cylindrical region 110 connects the petal region 106 to the anchoring region 108. Further, the petal region 106, the anchoring region 108, and the cylindrical region 110 are integrally moulded into a single component. Furthermore, the petal region 106, the anchoring region 108, and the cylindrical region 110 are integrally moulded into a single component by way of a moulding process such as, but not limited to, extrusion moulding, compression moulding, blow moulding, injection moulding, and rotational moulding, and the like. Aspects of the present disclosure are intended to include any type of the moulding process and/or any additive methods (e.g., 3D printing, filament deposition FFF, selective laser sintering of metal/plastic dusts, without deviating from the scope of the present disclosure.

In accordance with an embodiment of the present disclosure, the fiber closure external cable clip 100 may be made of a material such as, but not limited to, metal, plastic, and the like. The plastic material may include, but is not limited to, Polypropylene, Polycarbonate Acrylonitrile Butadiene Styrene (PC-ABS), Acrylonitrile butadiene styrene (ABS), Polycarbonate (PC), glass fiber reinforced polypropylene, polyamide 6 (PA6), and the like.

The petal region 106 may be configured to be detachably secured with the port 102. In particular, the petal region 106 may have one or more petal clamps 112 of which first and second petal clamps 112a and 112b are shown. Moreover, the one or more petal clamps 112 may extend vertically in an upward direction from the cylindrical region 110. Further, the one or more petal clamps 112 may be configured to encapsulate the port 102.

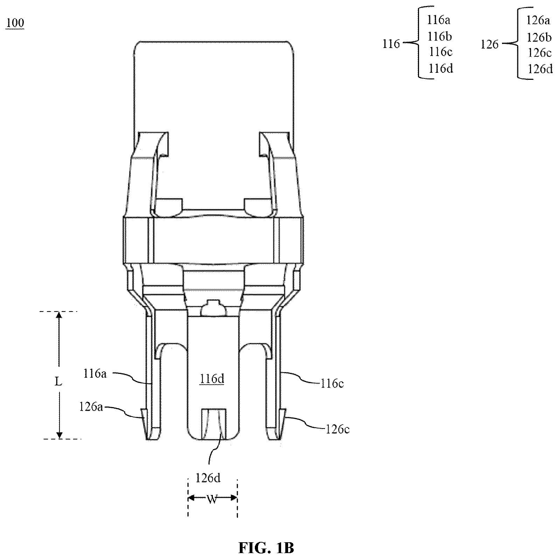

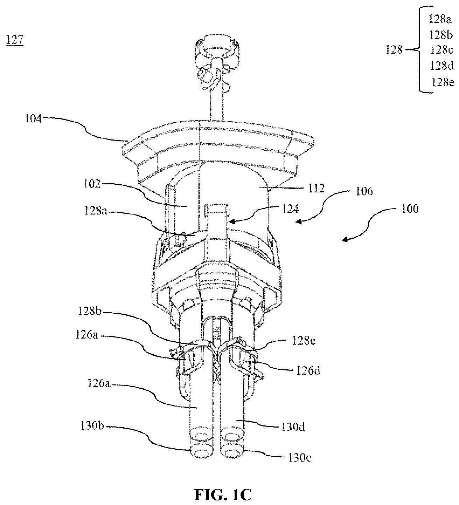

Although FIG. 1 illustrates that the one or more petal clamps 112 of the petal region 106 has two petal clamps (*i.e*., the first and second petal clamps 112a and 112b), it will be apparent to a person skilled in the art that the scope of the present disclosure is not limited to it. In various other aspects of the present disclosure, the one or more petal clamps 112 of the petal region 106 may have any number of petal clamps, without deviating from the scope of the present disclosure. In such a scenario, each petal clamp is configured to perform one or more operations in a manner similar to the operations of the first and second petal clamps 112a and 112b as described herein.

In accordance with an embodiment of the present disclosure, each petal clamp of the one or more petal clamps 112 may have a plurality of protrusions 114 of which first and second protrusions 114a and 114b are shown. Particularly, the plurality of protrusions 114 may be spaced apart from each other to encapsulate the port 102 and thus restricting the petal region 106 movement over the port 102. Moreover, the first and second protrusions 114a and 114b may be spaced apart from each other to encapsulate the port 102 such that a movement of the petal region 106 is restricted over the port 102.

Further, the anchoring region 108 may be structurally connected to the petal region 106. Specifically, as discussed, the anchoring region 108 may be structurally connected to the petal region 106 through the cylindrical region 110. The anchoring region 108 may have one or more anchoring clamps 116 of which first through fourth anchoring clamps 116a-116d are shown. The one or more anchoring clamps 116 may extend vertically in a downward direction from the cylindrical region 110. Particularly, the one or more anchoring clamps 116 may be configured to enable detachable securement of an optical fiber cable entering and/or exiting the fiber closure 104 with exactly one anchoring clamp of the one or more anchoring clamps 116.

For example, the first through fourth anchoring clamps 116a-116d may be configured to enable detachable securement of first through fourth optical fiber cables, respectively, entering and/or exiting the fiber closure 104. Specifically, when an optical fiber cable is detachably secured with the exactly one anchoring clamp of the one or more anchoring clamps 116, a radial movement of the optical fiber cable is restricted.

Although FIG. 1 illustrates that the one or more anchoring clamps 116 of the anchoring region 108 has four anchoring clamps (i.e., the first through fourth anchoring clamps 116a-116d), it will be apparent to a person skilled in the art that the scope of the present disclosure is not limited to it. In various other aspects of the present disclosure, the one or more anchoring clamps 116 of the anchoring region 108 may have any number of anchoring clamps, without deviating from the scope of the present disclosure. In such a scenario, each anchoring clamp is configured to perform one or more operations in a manner similar to the operations of the first through fourth anchoring clamps 116a-116d as described herein.

In accordance with an embodiment of the present disclosure, the cylindrical region 110 may have a shape such as, but not limited to, square, rectangular, circular, and the like. Preferably, the shape of the cylindrical region 110 may have an octagonal shape. The cylinder region 110 has a plurality of long sides 118 and a plurality of short sides 120. In particular, the plurality of long sides 118 has first through fourth long sides 118a-118d and the plurality of short sides 120 has first through fourth short sides 120a-120d, thus forming the octagonal shape. Moreover, the cylindrical region 110 having the octagonal shape may facilitate in restricting rotational movement of the external cable clip 100 when a plurality of external cable clips (such as the external cable clip 100) are installed on a plurality of ports 102 of a fiber closure 104 that are adjacent to one another. Further, the external cable clip 100 may have a plurality of support legs 122 of which first through fourth support legs 122a-122d are shown. The plurality of support legs 122 may be disposed between the cylindrical region 110 and the petal region 106 to provide overall support to the external cable clip 100 and to form a passage 124 that accepts one or more restraining elements 128.

Fig. 1B is a pictorial snapshot illustrating a side view of the external cable clip in accordance with an embodiment of the present disclosure. The one or more anchoring clamps 116 *i.e*., the first through fourth anchoring clamps 116a-116d may have one or more structures 126 of which first through fourth structures 126a-126d are shown, respectively, that may be adapted to restrict sliding of the optical fiber cable when the optical fiber cable is detachably secured with an anchoring clamp of the one or more anchoring clamps 116. Particularly, the first through fourth structures 126a-126d may be protrusions disposed onto an outer surface near distal edges of the first through fourth anchoring clamps 116a-116d. Moreover, each anchoring clamp of the one or more anchoring clamps 116 may have a length (L). Specifically, the length (L) of each anchoring clamp of the one or more anchoring clamps 116 may be in a range of 40 millimetres (mm) to 70 mm.

In accordance with an embodiment of the present disclosure, the first through fourth anchoring clamps 116a-116d may have the length (L) in the range of 40 mm to 70 mm. Further, each anchoring clamp of the one or more anchoring clamps 116 may have a width (W). Specifically, the width (W) of each anchoring clamp of the one or more anchoring clamps 116 may be in a range of 12 mm to 15 mm. In other words, the first through fourth anchoring clamps 116a-116d may have the width (W) in the range of 12 mm to 15 mm.

Fig. 1C is a pictorial snapshot illustrating a side perspective view of the external cable clip 100 installed onto a port 102 of a fiber closure 104 in accordance with an embodiment of the present disclosure. The external cable clip 100 has the plurality of support legs 122 that forms the passage 124 such that the passage 124 accepts a first restraining element 128a of the one or more restraining elements 128. The first restraining element 128a may be adapted to generate an inward compressive radial force over the cylindrical region 110 such that the combined action of the plurality of protrusions 114 of the one or more petal clamps 112 and the first restraining element 128a restricts the petal region 106 movement over the port 102 such that an optical fiber cable entering and/or exiting the fiber closure 104 can be detachably secured thereby restricting a movement (such as, but not limited to, a radial movement or a movement of traction from outside) of the optical fiber cable.

Further, the first through fourth anchoring clamps 116a-116d may have the first through fourth structures 126a-126d that may be adapted to restrict sliding of first through fourth optical fiber cables 130a-130d when the first through fourth optical fiber cables 130a-130d are detachably secured with first through fourth anchoring clamps 116a-116d by way of second through fifth restraining element 128b-128e of the plurality of restraining element 128.

In accordance with an embodiment of the present disclosure, the plurality of restraining element 128 may be, but not limited to, a plastic tie, a metal clamp, and the like. Aspects of the present disclosure is intended to include and/or otherwise cover any type of the plurality of restraining element 128, known to a person having ordinary skill in the art, without deviating from the scope of the present disclosure. In operation, to install the external cable clip 100, a user may insert the external cable clip 100 over the port 102 that is opened.

Further, the user may lock the external cable clip 100 in position by way of the first restraining element 128a that is inserted through the passage 124. Particularly, in a rest position, the external cable clip 100 may be configured to automatically lock on the port 102 by way of an inward radial compression created by the one or more petal clamps 112. Further, to remove the external cable clip 100, the first restraining element 128a may be untied and the user may pull the one or more petal clamps 112 in an outward direction to release the port 102.

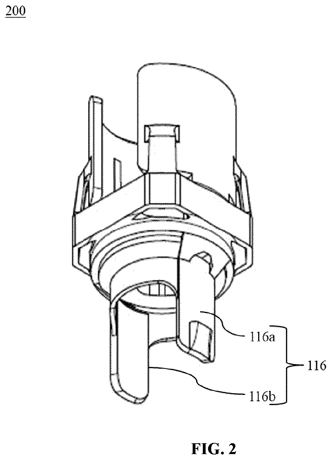

Fig. 2 is a pictorial snapshot illustrating side perspective view of an external cable clip in accordance with an embodiment of the present disclosure. The external cable clip 200 may be structurally and functionally similar to the external cable clip 100 of Fig. 1A, however, the one or more anchoring clamps 116 of the external cable clip 200 has two anchoring clamps i.e., first and second anchoring clamps 116a and 116b. Particularly, the first and second anchoring clamps 116a and 116b may be configured to enable detachable securement of first and second optical fiber cables, respectively, entering and/or exiting the fiber closure 104. Further, when an optical fiber cable (such as the first and second optical fiber cables) is detachably secured with an anchoring clamp (e.g., the first and second anchoring clamps 116a and 116b) of the one or more anchoring clamps 116, a movement (such as, but not limited to, a radial movement or a movement of traction from outside) of the optical fiber cable is restricted.

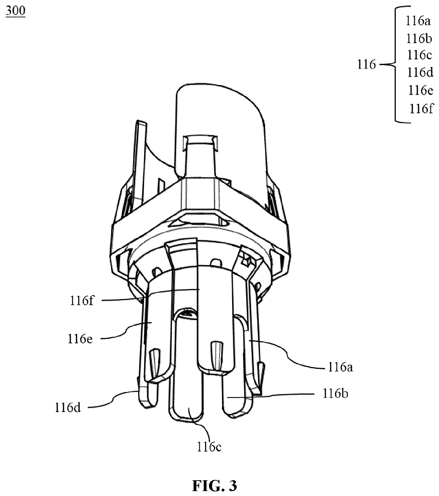

Fig. 3 is a pictorial snapshot illustrating side perspective view of another external cable clip in accordance with another embodiment of the present disclosure. The external cable clip 300 may be structurally and functionally similar to the external cable clip 100 of Fig. 1A and the external cable clip 200 of Fig. 2. However, the one or more anchoring clamps 116 of the external cable clip 300 has six anchoring clamps i.e., first through sixth anchoring clamps 116a-116f. In particular, the first through sixth anchoring clamps 116a-116f may be configured to enable detachable securement of first through sixth optical fiber cables, respectively, entering and/or exiting the fiber closure 104. Moreover, when an optical fiber cable (such as the first through sixth optical fiber cables) is detachably secured with an anchoring clamp (e.g., the first through sixth anchoring clamps 116a-116f) of the one or more anchoring clamps 116, a movement (such as, but not limited to, a radial movement or a movement of traction from outside) of the optical fiber cable is restricted.

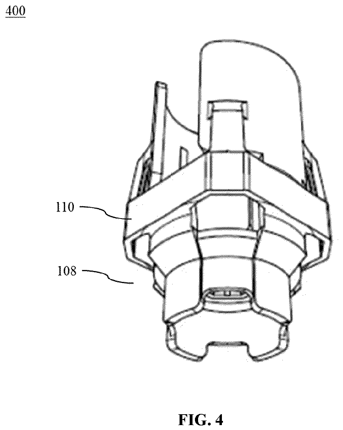

Fig. 4 is a pictorial snapshot illustrating a side perspective view of a blind cable clip in accordance with an embodiment of the present disclosure. The blind cable clip 400 may be structurally and functionally similar to the external cable clip 100 of Fig. 1A, the external cable clip 200 of Fig. 2, and the external cable clip 300 of Fig. 3. However, the anchoring region 108 of the blind cable clips 400 zero anchoring clamps. Particularly, the blind cable clip 400 may be configured to restrict the movement of an external cable clip (such as the external cable clip 100 of Fig. 1A, the external cable clip 200 of Fig. 2, and the external cable clip 300 of Fig. 3) when only one external cable clip (such as the external cable clip 100 of FIG. 1A, the external cable clip 200 of FIG. 2, and the external cable clip 300 of FIG. 3) is installed onto the fiber closure 104. For example, a cylindrical region (i.e., similar to the cylindrical region 110 of the external cable clip 100) of the blind cable clip 400 is engaged with the cylindrical region 110 of the external cable clip 100 to restrict the movement of the external cable clip 100.

In accordance with an embodiment of the present disclosure, the blind cable clip 400 and the external cable clip 100 may be tied together by way of a restraining element (not shown). The restraining element may be, but not limited to, a plastic tie, a metal clamp, and the like. Aspects of the present disclosure are intended to include and/or otherwise cover any type of the restraining element, known to a person having ordinary skill in the art, without deviating from the scope of the present disclosure.

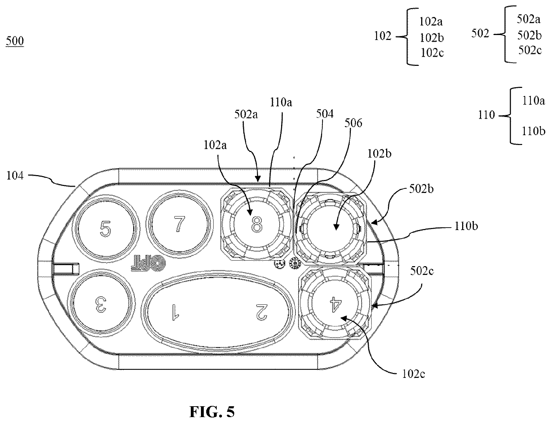

Fig. 5 is a pictorial snapshot illustrating a bottom view of the fiber closure having a plurality of external cable clips installed thereto in accordance with an embodiment of the present disclosure. The bottom view 500 of the fiber closure 104 having a plurality of external cable clips 502 (that are structurally and functionally similar to the external cable clip 100, 200, and 300) installed thereto. As discussed, the cylindrical region 110 of each of the plurality of external cable clips 502 may have the octagonal shape. Particularly, the octagonal shape may facilitate in restricting rotational movement of the plurality of external cable clips 502 when the plurality of external cable clips 502 are installed on the plurality of adjacent ports 102a and 102b of the fiber closure 104, respectively. As illustrated, first through third external cable clips 502a-502c of the plurality of external cable clips 502 are installed onto first through third ports 102a-102c of the plurality of ports 102, respectively. The first through third ports 102a-102c are adjacent ports such that a long wall 504 of the cylindrical region 110a (having the octagonal shape) of the first external cable clips 502a restricts rotational movement of the second external cable clips 502b by engaging with a long wall 506 of the cylindrical region 110b (having the octagonal shape) of the second external cable clips 502b, and vice versa.

Moreover, the octagonal shape of the cylindrical region 110 provides strength, allows right spacing between optical fiber cables, and permits alignment of the plurality of external cable clips 502.

In accordance with an embodiment of the present disclosure, the first external cable clips 502a and the second external cable clips 502b may be tied together by way of a restraining element (not shown). The restraining element may be, but not limited to, a plastic tie, a metal clamp, and the like. Aspects of the present disclosure are intended to include and/or otherwise cover any type of the restraining element, known to a person having ordinary skill in the art, without deviating from the scope of the present disclosure.

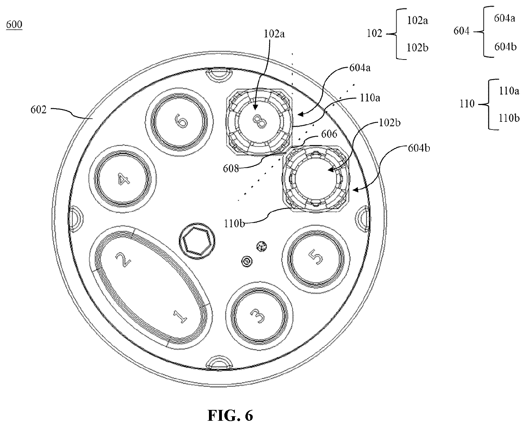

Fig. 6 a bottom view of a circular fiber closure having a plurality of external cable clips installed thereto in accordance with an embodiment of the present disclosure. The bottom view 600 of a circular fiber closure 602 having a plurality of external cable clips 604 (that are structurally and functionally similar to the external cable clip 100, 200, and 300) installed thereto. As discussed, the cylindrical region 110 of each of the plurality of external cable clips 604 may have the octagonal shape.

Specifically, the octagonal shape may facilitate in restricting rotational movement of the plurality of external cable clips 604 when the plurality of external cable clips 604 are installed on the plurality of adjacent ports 102 of the circular fiber closure 602, respectively.

As illustrated, first and second external cable clips 604a-604b of the plurality of external cable clips 604 are installed onto first and second ports 102a-102b of the plurality of ports 102, respectively. The first and second ports 102a-102b are adjacent ports such that a short wall 606 of the cylindrical region 110a (having the octagonal shape) of the first external cable clips 604a restricts rotational movement of the second external cable clips 604b by engaging with a short wall 608 of the cylindrical region 110b (having the octagonal shape) of the second external cable clips 604b, and vice versa. Further, the octagonal shape of the cylindrical region 110 provides strength, allows right spacing between optical fiber cables, and permits alignment of the plurality of external cable clips 604. Furthermore, the octagonal shape facilitates to block rotation of an adjacent external cable clips (*e.g.,* the second external cable clips 604b) in 3 planes *i.e.,* a vertical plane, a horizontal plane, and angled (in the range of 15°-60°). In some aspects of the present disclosure, the first external cable clips 604a and the second external cable clips 604b may be tied together by way of a restraining element (not shown).

In accordance with an embodiment of the present disclosure, the restraining element may be, but not limited to, a plastic tie, a metal clamp, and the like. Aspects of the present disclosure are intended to include and/or otherwise cover any type of the restraining element, known to a person having ordinary skill in the art, without deviating from the scope of the present disclosure.

In accordance with an embodiment of the present disclosure, fiber closure external cable clip 100, 200, 300 configured to be mounted on a port 102 of the fiber closure 104 comprises a petal region 106 configured to be detachably secured with the port 102 wherein each petal clamp of the one or more petal clamps 112 comprises a plurality of protrusions 114 spaced apart from each other to encapsulate the port 102 and restrict a movement of the petal region 106 over the port 102 and an anchoring region 108 structurally connected to the petal region 106. The anchoring region 108 have one or more anchoring clamps 116, and the one or more anchoring clamps 116 further have one or more structures 126 to restrict sliding of the optical fiber cable 130. In particular, the optical fiber cable entering and/or exiting the fiber closure (104) is detachably secured to exactly one anchoring clamp of the one or more anchoring clamps (116), thereby restricting a movement of the optical fiber cable (130).

Advantageously, the external cable clips 100, 200, 300 may be adapted to provide more strength due to the cable restrain mechanism. In particular, the external cable clips 100, 200, 300 may reduce connectivity damage in the fiber closure 104 while pulling a fiber cable from outside and/or moving the fiber closure 104 from one place to another. Moreover, the external cable clips 100, 200, 300 further enables simplified and faster installation. Further, the external cable clips 100, 200, 300 provides a locking mechanism to an optical fiber cable over the port 102 of the fiber closure 104 and hence, the restraint system get improved, which further provides additional support to reduce the damages in the fiber closure 104 connectivity while pulling the optical fiber cable and/or moving the fiber closure 104. Furthermore, the optical fiber cable is restrained by using one or more retraining elements 128 externally and hence, the installation process becomes faster and simpler..

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A fiber closure external cable clip (100, 200, 300) configured to be mounted on a port (102) of the fiber closure (104), **characterized in that**:
a petal region (106) configured to be detachably secured with the port (102); and
an anchoring region (108) structurally connected to the petal region (106),
wherein the anchoring region (108) having one or more anchoring clamps (116),
wherein an optical fiber cable entering and/or exiting the fiber closure (104) is detachably secured to exactly one anchoring clamp of the one or more anchoring clamps (116), thereby restricting a movement of the optical fiber cable (130).

2. The fiber closure external cable clip (100, 200, 300) of claim 1, where the petal region (106) further comprising one or more petal clamps (112), where the one or more petal clamps (112) encapsulates the port (102).

3. The fiber closure external cable clip (100, 200, 300) of claim 1, where the petal region (106) can be detachably secured with the port (102) by one or more restraining elements (128).

4. The fiber closure external cable clip (100, 200, 300) where the cable entering and/or exiting the fiber closure (104) are detachably secured to exactly one anchoring clamp of the one or more anchoring clamps (116) by way of one or more restraining elements (128).

5. The fiber closure external cable clip (100, 200, 300) of claim 1, where each petal clamp of the one or more petal clamps (112) further comprising a plurality of protrusions (114) spaced apart from each other to encapsulate the port (102) and restrict a movement of the petal region (106) over the port (102).

6. The fiber closure external cable clip (100, 200, 300) of claim 1, further comprising a cylindrical region (110) connecting the petal region (106) to the anchoring region (108).

7. The fiber closure external cable clip (100, 200, 300) of claim 6, where the cylindrical region (110) has an octagonal shape.

8. The fiber closure external cable clip (100, 200, 300) of claim 6, where the petal region (106), the anchoring region (108), and the cylindrical region (110) are integrally moulded into a single component.

9. The fiber closure external cable clip (100, 200, 300) of claim 1, where the one or more anchoring clamps (116) has one or more structures (126) to restrict sliding of the optical fiber cable (130).

10. The fiber closure external cable clip (100, 200, 300) of claim 1, where each anchoring clamp of the one or more anchoring clamps (116) has a length (L) in a range of 40 millimetres (mm) to 70 mm.

11. The cable hauling system (100) of claim 1, where each anchoring clamp of the one or more anchoring clamps (116) has a width (W) in a range of 12 mm to 15 mm.

12. A fiber closure external cable clip (100, 200, 300) configured to be mounted on a port (102) of the fiber closure (104), **characterized in that**:
a petal region (106) configured to be detachably secured with the port (102); wherein each petal clamp of the one or more petal clamps (112) comprises a plurality of protrusions (114) spaced apart from each other to encapsulate the port (102) and restrict a movement of the petal region (106) over the port (102);and
an anchoring region (108) structurally connected to the petal region (106), wherein the anchoring region (108) have one or more anchoring clamps (116), and the one or more anchoring clamps (116) further have one or more structures (126) to restrict sliding of the optical fiber cable (130).
wherein an optical fiber cable entering and/or exiting the fiber closure (104) is detachably secured to exactly one anchoring clamp of the one or more anchoring clamps (116), thereby restricting a movement of the optical fiber cable (130).

13. The fiber closure external cable clip (100, 200, 300) of claim 1, where the petal region (106) can be detachably secured with the port (102) by one or more restraining elements (128).

14. The fiber closure external cable clip (100, 200, 300) where the cable entering and/or exiting the fiber closure (104) are detachably secured to exactly one anchoring clamp of the one or more anchoring clamps (116) by way of one or more restraining elements (128).

15. The fiber closure external cable clip (100, 200, 300) of claim 1, where each petal clamp of the one or more petal clamps (112) further comprising a plurality of protrusions (114) spaced apart from each other to encapsulate the port (102) and restrict a movement of the petal region (106) over the port (102).
